# FASCICULE DE BREVET EUROPEEN

(11) **EP 1 953 512 B1**
(45) Date de publication et mention de la délivrance du brevet: **21.05.2014**
(21) Numéro de dépôt: 08001309.7
(22) Date de dépôt: 24.01.2008
(51) Int. Cl.: G01K 1/14, G01K 13/02

(54) **Capteur de haute température et procédé de fabrication d' un tel capteur**
Hochtemperatursensor und Herstellungsverfahren eines solchen Sensors
High-temperature sensor and method for manufacturing such a sensor

(30) Priorité: 30.01.2007 FR 0700609
(43) Date de publication de la demande: 06.08.2008
(73) Titulaire: SC2N, 94000 Créteil (FR)
(72) Inventeur: Witemberg, Vincent, 14123 Ifs (FR); Sannier, Jean, 14250 Juaye Mondaye (FR); Ramond, Daniel, 14210 Evrecy (FR); Donatien, Sébastien, 14170 Perrieres (FR)
(74) Mandataire: Croonenbroek, Thomas Jakob

(56) Documents cités:
- EP-A- 1 785 705
- EP-A1- 0 783 096
- FR-A1- 2 847 979

## Description

La présente invention concerne un capteur de haute température, notamment conçu pour mesurer des températures élevées (> 700°C par exemple), ainsi qu'un procédé de fabrication d'un tel capteur.

La présente invention s'applique en particulier aux capteurs de température adaptés pour mesurer la température des gaz de véhicules automobiles tels que les gaz d'échappement ou les gaz dans le campartiment moteur.

On connaît de tels capteurs par exemple des documents FR 2 847 979, FR 2 880 685, FR 2 864 234, EP 0 783 096, ou EP 1 785 705.

Ces capteurs comprennent un composant électrique tel qu'une thermistance, enfermée dans un boîtier de forme générale tubulaire et métallique, pour mesurer la température.

Ce composant électrique est relié vers l'extérieur à un circuit électrique / électronique d'exploitation d'un signal de mesure, via des fils électriques.

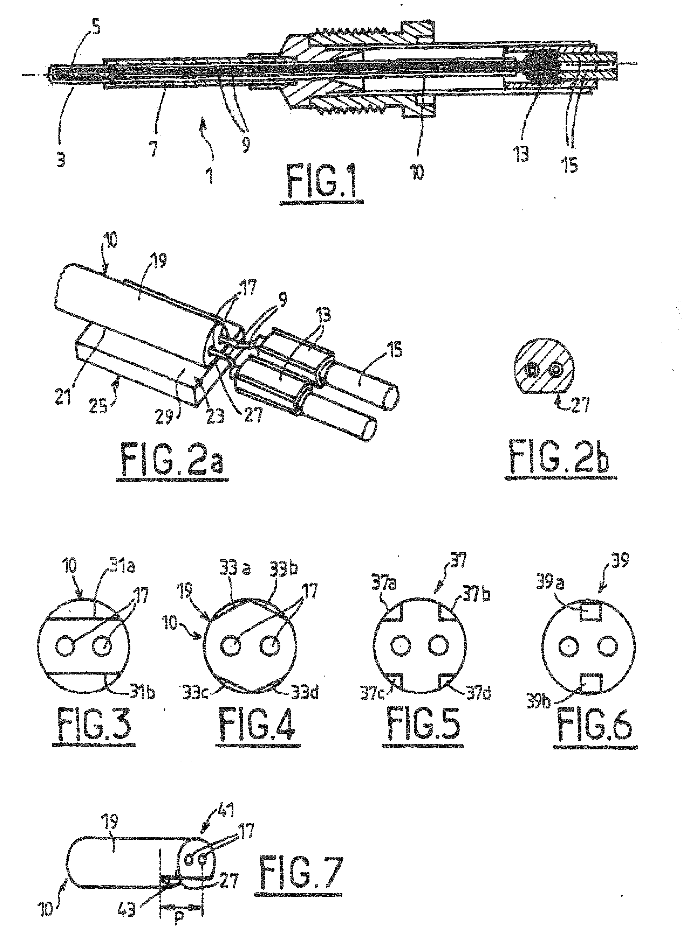

On a représenté sur la figure 1 un exemple de l'état de la technique. Sur cette figure, on voit un capteur de haute température 1. Ce capteur 1 comprend à une extrémité 3 un composant électrique de mesure, tel qu'une thermistance 5. La thermistance 5 est logée dans un boîtier 7 de protection vis-à-vis de l'extérieur (gaz, eau, humidité, etc...). Deux premiers conducteurs électriques 9 sont en contact avec la thermistance 5 et cheminent le long du boîtier de protection 7 pour être accessibles à l'extérieur de celui-ci et pour fournir une information électrique représentative de la résistance de l'élément 5 et par conséquent de la température mesurée. Ces conducteurs 9 sont isolés et maintenus entre eux par une gaine isolante 10 logée dans le boîtier 7.

Pour des raisons de coût, les premiers fils électriques 9 sont reliés par l'intermédiaire d'une pièce de liaison électrique 13, par exemple sous forme d'une cosse, à des seconds fils électriques 15, de diamètre plus important et de matériaux moins nobles, servant à assurer la liaison électrique avec les circuits électriques.

Toutefois, lors de la fabrication de tels capteurs, l'étape d'assemblage des premiers fils électriques en contact avec la thermistance, aux seconds fils électriques est délicate.

En particulier, il est délicat de ne pas désaligner les sections des fils électriques en regard au moment du raccord, d'autant plus que le raccord peut nécessiter l'application de fortes contraintes mécaniques, telle que la déformation de cosses électriques, dans l'espace réduit du capteur.

La présente invention vise à remédier à ce problème en proposant un ensemble comportant un capteur de haute température apte à être monté de manière rapide et fiable sans augmenter démesurément les coûts de fabrication et un support de montage, distinct dudit capteur.

A cet effet, l'invention prévoit un capteur de haute température pour la mesure de gaz d'échappement de véhicule automobile, comprenant :
- une thermistance,
- deux fils électriques ayant chacun une extrémité reliée à la thermistance, pour acheminer le signal de température fourni par la thermistance à une unité de traitement,
- une gaine isolante céramique dont l'enveloppe extérieure est de forme générale cylindrique, ladite gaine comportant pour chaque fil électrique, un canal associé de maintien,
caractérisé en ce que ledit ensemble comporte en outre un support de montage, distinct dudit capteur et en ce qu'au moins une portion de ladite enveloppe de ladite gaine présente au moins une face d'appui susceptible de coopérer avec une face associée dudit un support de montage.

Selon un autre objet, l'invention vise un procédé de fabrication d'un capteur haute température pour la mesure de gaz d'échappement de véhicule automobile caractérisé en ce qu'il comporte les étapes suivantes :
- insérer les fils électriques de liaison d'une thermistance dans une gaine isolante céramique, ladite gaine comportant une face d'appui ainsi que, pour chaque fil électrique, un canal associé de maintien;
- disposer l'ensemble ainsi formé sur un support de montage distinct dudit capteur comportant une face associée de sorte que la face d'appui coopère avec la face associée pour stabiliser ledit ensemble par rapport au support de montage ;
- effectuer le câblage des fils électriques de liaison avec des seconds fils électriques ;
- fournir un boîtier creux de forme générale allongée comportant à l'une de ses extrémités un logement pour une thermistance et à l'autre de ses extrémités une ouverture ;
- insérer ledit ensemble par l'ouverture du boîtier jusqu'à la mise en place de la thermistance dans le logement ;
- refermer ladite ouverture.

D'autres avantages et caractéristiques apparaîtront à la lecture de la description de l'invention, ainsi que des figures suivantes sur lesquelles :
- la figure 1 précédemment décrite, présente une vue en coupe longitudinale d'un capteur connu de l'état de la technique,
- la figure 2a présente une vue en perspective d'une partie d'un capteur selon l'invention lors d'une étape de sa fabrication,
- la figure 2b présente une vue en coupe transversale d'une gaine du capteur de la figure 2a,
- les figures 3, 4, 5 et 6 représentent quatre vues en coupe transversale d'une gaine d'un capteur selon quatre autres variantes de réalisation de l'invention,
- la figure 7 représente une vue en perspective d'une gaine du capteur selon l'invention selon un autre mode de réalisation.

Sur toutes les figures, les éléments identiques portent les mêmes numéros de référence.

Comme le capteur de haute température 1 évoqué précédemment, l'invention prévoit un capteur de haute température comprenant une thermistance 5, deux fils électriques 9 ayant chacun une extrémité reliée à la thermistance 5 pour acheminer le signal de température fourni par la thermistance 5 à une unité de traitement, et une gaine isolante 10 qui maintient les fils électriques 9.

La thermistance 5 est un composant passif en matériau semi-conducteur dont la résistance varie en fonction de la température et peut être du type « CTN », coefficient de température négatif (ou « NTC », Négative Température Coefficient en anglais) lorsque la température décroît en fonction de l'élévation de la température ou de type « CTP » coefficient de température positif (ou « PTC », Positive Température Coefficient en anglais) dans le cas contraire.

La gaine 10, logée dans un boîtier 7 en acier réfractaire par exemple, est de forme générale allongée, dont la direction longitudinale correspond à la direction des fils électriques 9.

La gaine comporte une enveloppe 19 dont la forme générale est cylindrique, de manière à pouvoir épouser la paroi de forme tubulaire du boîtier de protection 7 et être maintenu par celui-ci.

La gaine 10 est en matière céramique électriquement isolante et résistante à la chaleur. La gaine 10 comporte deux canaux de maintien 17 pour chacun des deux premiers conducteurs électriques 9 en contact avec la thermistance 5, de sorte qu'ils soient isolés entre eux et maintenus.

Les premiers fils électriques 9 sont reliés chacun par l'intermédiaire d'une pièce de liaison électrique 13, par exemple sous forme d'une cosse, à des seconds fils électriques 15 de diamètre plus important et de matériaux moins nobles servant à assurer la liaison électrique avec les circuits électriques de l'unité de traitement, pour réduire les coûts.

Le capteur selon l'invention se distingue de ceux connus de l'état de la technique par le fait qu'au moins une portion de l'enveloppe 19 de la gaine 10 présente au moins une face d'appui 21 susceptible de coopérer avec une face associée 23 d'un support de montage 25.

La face associée 23 est prévue dans un support de montage 25 distinct du capteur. La face 23 est susceptible de coopérer avec la face d'appui 21 prévue dans l'enveloppe 19 de la gaine 10 au moment de l'assemblage des premiers fils électriques 9 avec les seconds fils électriques 15.

Selon un premier mode de réalisation illustré par les figures 2a et 2b, la face d'appui 21 du capteur de haute température selon l'invention comporte un méplat 27 réalisé sur l'enveloppe 19 de la gaine isolante céramique 10 et de préférence formé dans un plan généralement parallèle et inférieur au plan défini par les canaux de maintien 17 de chaque fils électriques 9.

La face associée 23 du support de montage 25 présente une face plane 29 pour coopérer avec le méplat 27 de manière à ce que le méplat 27 s'appuie stablement sur la face plane 29.

Pour augmenter la stabilité de l'appui entre la gaine 10 et le support de montage 25, on prévoit que la face d'appui 21 présente plusieurs méplats 27, adjacents on non avec le méplat précédent.

La face associée 23 du support de montage 25 présente alors également plus d'une face plane 29 correspondante, de manière à ce que chaque face plane 29 coopère avec chaque méplat 27 des faces d'appui 21.

Ainsi, et tel qu'illustré par la figure 3, on prévoit deux méplats 31a, 31b réalisés dans l'enveloppe 19 de la gaine 10 pour former la face d'appui 21, de telle sorte que les deux méplats 31a, 31b soient disposés en vis-à-vis dans un plan généralement parallèle au plan défini par les canaux de maintien 17 comportant chaque fils électriques 9.

On peut également prévoir, comme illustré sur la figure 4, que la face d'appui 21 présente deux paires de méplats 33a, 33b et 33c, 33d réalisés sur l'enveloppe 19 de la gaine 10.

Les paires de méplats 33a, 33b et 33c, 33d sont disposées en vis-à-vis, chaque paire 33a, 33b et 33c, 33d étant située dans un plan généralement parallèle au plan défini par les canaux de maintien 17.

De préférence, les méplats 33a, 33b, 33c, 33d de chaque paire sont adjacents deux à deux. Ainsi le méplat 33a est adjacent au méplat 33b et la paire de méplats 33a, 33b est située dans le plan supérieur et généralement parallèle au plan défini par les canaux de maintien 17.

Le méplat 33c est adjacent au méplat 33d et la paire de méplats 33c, 33d est située dans le plan inférieur et généralement parallèle au plan défini par les canaux de maintien 17.

Ces différents modes de réalisation présentent l'avantage d'être simples de fabrication et peu coûteux.

Selon un autre mode de réalisation, la face d'appui 21 comporte une ou plusieurs encoches 37 et les faces associées de support de montage 25 comportent une ou plusieurs protubérances conjuguées complémentaires (non représentées).

On peut, par exemple et tel qu'illustré sur la figure 5, envisager de disposer quatre encoches 37a, 37b, 37c et 37d sur le pourtour de l'enveloppe 19 de la gaine isolante 10, réparties de manière à optimiser la stabilité de la gaine 10 sur le support de montage 25.

La section transversale de la face d'appui 21 possède alors une forme générale sensiblement en croix.

Dans une autre variante, on prévoit que la face d'appui 21 comporte au moins une rainure 39 destinée à coopérer avec une face associée 23 du support de montage 25 comportant au moins une nervure.

On prévoit par exemple deux rainures 39a et 39b dont les sections transversales sont diamétralement opposées et forment un plan généralement perpendiculaire au plan défini par les canaux de maintien 17 de chaque fils électriques 9 (figure 6).

Les variantes selon lesquelles la face d'appui 21 comporte au moins une encoche 37 ou au moins une rainure 39, présentent l'avantage de former un appui de la gaine 10 sur le support de montage 25 particulièrement stable.

Avantageusement, on prévoit que la face d'appui 21, qui peut être non limitativement réalisée selon l'une des variantes précédemment décrite, est formée sur une portion P seulement de la longueur de l'enveloppe 19 de la gaine 10 comme schématisé sur la figure 7.

Comme le suggèrent les figures 3, 4, 5, 6 et 7, cette portion P est préférentiellement formée dans une extrémité 41 de la gaine 10 pour une plus grande facilité de réalisation, mais pourrait également être formée dans une zone médiane ou toute autre zone de l'enveloppe 19 de la gaine 10.

De cette manière, la face d'appui 21 présente l'avantage de former en outre, au moins une butée 43 dans l'axe longitudinal de la gaine 10, ce qui permet d'augmenter encore la stabilité de la gaine 10 sur le support de montage 25 en évitant ainsi que la gaine 10 se décale longitudinalement.

La gaine 10 ainsi positionnée sur le support de montage distinct 25 permet à la gaine 10 de ne pas rouler et de ce fait, facilite le câblage des premiers fils électriques 9 avec les seconds fils électriques 15.

Les risques qualitatifs de fabrication sont alors réduits et les temps de montage raccourcis.

Le capteur qui vient d'être décrit peut être réalisé selon un procédé particulièrement simple et économique comportant les étapes suivantes :
- insérer les fils électriques de liaison (9) d'une thermistance (5) dans une gaine (10) isolante céramique, ladite gaine (10) comportant une face d'appui (21) ainsi que, pour chaque fil électrique (9), un canal associé de maintien (17) ;
- disposer l'ensemble (5, 9, 10) ainsi formé sur un support de montage (25) comportant une face associée (23) de sorte que la face d'appui (21) coopère avec la face associée (23) pour stabiliser ledit ensemble (5, 9, 10) par rapport au support de montage (25) ;
- effectuer le câblage des fils électriques de liaison (9) avec des seconds fils électriques (15) ;
- fournir un boîtier (7) creux de forme générale allongée comportant à l'une (3) de ses extrémités un logement (3) pour une thermistance (5) et à l'autre de ses extrémités une ouverture ;
- insérer ledit ensemble (5, 9, 10) par l'ouverture du boîtier (7) jusqu'à la mise en place de la thermistance (5) dans le logement (3) ;
- refermer ladite ouverture, par exemple par sertissage.

Le boîtier (7) peut être avantageusement réalisé d'une seule pièce, par exemple par emboutissage. Il peut également être réalisé en plusieurs pièces, comme dans l'exemple de la figure 1 où il est réalisé par différents tubes sertis entre eux.

## Revendications

1. Ensemble comportant un capteur de haute température pour la mesure de gaz d'échappement de véhicule automobile, ledit capteur de haute température comprenant :
- une thermistance (5),
- deux fils électriques (9) ayant chacun une extrémité reliée à la thermistance (5), pour acheminer le signal de température fourni par la thermistance (5) à une unité de traitement,
- une gaine (10) isolante céramique dont l'enveloppe (19) extérieure est de forme générale cylindrique, ladite gaine (10) comportant pour chaque fil électrique (9), un canal associé de maintien (17),
**caractérisé en ce que** ledit ensemble comporte en outre un support de montage (25), distinct dudit capteur et **en ce qu'**au moins une portion (P) de l'enveloppe (19) de ladite gaine (10) présente au moins une face d'appui (21) susceptible de coopérer avec une face associée (23) dudit support de montage (25).

2. Ensemble selon la revendication 1, **caractérisé en ce que** la face d'appui (21) comporte au moins un méplat (27) destiné à coopérer avec une face plane associée (23) du support de montage (25).

3. Ensemble selon la revendication 2, **caractérisé en ce que** le méplat (27) est formé dans un plan généralement parallèle et inférieur au plan défini par les canaux de maintien (17).

4. Ensemble selon la revendication 2, **caractérisé en ce que** la face d'appui (21) comporte deux méplats (31a, 31b) disposés en vis-à-vis dans un plan généralement parallèle au plan défini par les canaux de maintien (17).

5. Ensemble selon la revendication 2, **caractérisé en ce que** la face d'appui (21) comporte deux paires de méplats (33a, 33b; 33c, 33d) disposées en vis-à-vis dans un plan généralement parallèle au plan défini par les canaux de maintien (17) et dont les méplats (33a, 33b, 33c, 33d) de chaque paire sont adjacents.

6. Ensemble selon l'une quelconque des revendications précédentes, **caractérisé en ce que** la face d'appui (21) comporte au moins une encoche (37) destinée à coopérer avec une face associée (23) du support de montage (25) présentant au moins une protubérance conjuguée.

7. Ensemble selon la revendication 6, **caractérisé en ce que** la face d'appui (21) comporte quatre encoches (37a, 37b, 37c, 37d) de telle sorte que la section transversale de la face d'appui (21) présente une forme générale sensiblement en croix.

8. Ensemble selon l'une quelconque des revendications précédentes, **caractérisé en ce que** la face d'appui (21) comporte au moins une rainure (39) destinée à coopérer avec une face associée du support de montage comportant au moins une nervure.

9. Ensemble selon la revendication 8, **caractérisé en ce que** la face d'appui (21) comporte deux rainures (39a, 39b) dont les sections transversales sont diamétralement opposées et forment un plan généralement perpendiculaire au plan défini par les canaux de maintien (17).

10. Ensemble selon l'une quelconque des revendications précédentes, **caractérisé en ce que** la thermistance (5) est une CTP (Coefficient de Température Positif) ou une CTN (Coefficient de Température Négatif).

11. Procédé de fabrication d'un capteur haute température pour la mesure de gaz d'échappement de véhicule automobile **caractérisé en ce qu'**il comporte les étapes suivantes :
- insérer les fils électriques de liaison (9) d'une thermistance (5) dans une gaine (10) isolante céramique, ladite gaine (10) comportant une face d'appui (21) ainsi que, pour chaque fil électrique (9), un canal associé de maintien (17) ;
- disposer l'ensemble (5, 9, 10) ainsi formé sur un support de montage (25) distinct dudit capteur comportant une face associée (23) de sorte que la face d'appui (21) coopère avec la face associée (23) pour stabiliser ledit ensemble (5, 9, 10) par rapport au support de montage (25) ;
- effectuer le câblage des fils électriques de liaison (9) avec des seconds fils électriques (15) ;
- fournir un boîtier (7) creux de forme générale allongée comportant à l'une (3) de ses extrémités un logement (3) pour une thermistance (5) et à l'autre de ses extrémités une ouverture ;
- insérer ledit ensemble (5, 9, 10) par l'ouverture du boîtier (7) jusqu'à la mise en place de la thermistance (5) dans le logement (3) ;
- refermer ladite ouverture.

## Patentansprüche

1. Einheit, die einen Hochtemperatursensor zur Messung der Kraftfahrzeugabgase aufweist, wobei der Hochtemperatursensor enthält:
- einen Thermistor (5),
- zwei Leitungsdrähte (9), von denen je ein Ende mit dem Thermistor (5) verbunden ist, um das vom Thermistor (5) gelieferte Temperatursignal an eine Verarbeitungseinheit weiterzuleiten,
- eine keramische Isolierhülle (10), deren Außenmantel (19) von allgemein zylindrischer Form ist, wobei die Hülle (10) für jeden Leitungsdraht (9) einen zugeordneten Haltekanal (17) aufweist,
**dadurch gekennzeichnet, dass** die Einheit außerdem einen vom Sensor getrennten Montageträger (25) aufweist, und dass mindestens ein Abschnitt (P) des Mantels (19) der Hülle (10) mindestens eine Auflageseite (21) hat, die mit einer zugeordneten Seite (23) des Montageträgers (25) zusammenwirken kann.

2. Einheit nach Anspruch 1, **dadurch gekennzeichnet, dass** die Auflageseite (21) mindestens eine Abflachung (27) aufweist, die dazu bestimmt ist, mit einer zugeordneten flachen Seite (23) des Montageträgers (25) zusammenzuwirken.

3. Einheit nach Anspruch 2, **dadurch gekennzeichnet, dass** die Abflachung (27) in einer Ebene geformt ist, die allgemein parallel zu und unterhalb der von den Haltekanälen (17) definierten Ebene liegt.

4. Einheit nach Anspruch 2, **dadurch gekennzeichnet, dass** die Auflageseite (21) zwei Abflachungen (31a, 31b) aufweist, die in einer Ebene allgemein parallel zu der von den Haltekanälen (17) definierten Ebene einander gegenüber angeordnet sind.

5. Einheit nach Anspruch 2, **dadurch gekennzeichnet, dass** die Auflageseite (21) zwei Paare von Abflachungen (33a, 33b; 33c, 33d) aufweist, die in einer zu der von den Haltekanälen (17) definierten Ebene allgemein parallelen Ebene einander gegenüber angeordnet sind, und von denen die Abflachungen (33a, 33b, 33c, 33d) jedes Paars einander benachbart sind.

6. Einheit nach einem der vorhergehenden Ansprüche, **dadurch gekennzeichnet, dass** die Auflageseite (21) mindestens eine Kerbe (37) aufweist, die dazu bestimmt ist, mit einer zugeordneten Seite (23) des Montageträgers (25) zusammenzuwirken, die mindestens einen dazugehörigen Vorsprung aufweist.

7. Einheit nach Anspruch 6, **dadurch gekennzeichnet, dass** die Auflageseite (21) vier Kerben (37a, 37b, 37c, 37d) aufweist, so dass der Querschnitt der Auflageseite (21) allgemein kreuzförmig ist.

8. Einheit nach einem der vorhergehenden Ansprüche, **dadurch gekennzeichnet, dass** die Auflageseite (21) mindestens eine Rille (39) aufweist, die dazu bestimmt ist, mit einer zugeordneten Seite des Montageträgers zusammenzuwirken, die mindestens eine Rippe aufweist.

9. Einheit nach Anspruch 8, **dadurch gekennzeichnet, dass** die Auflageseite (21) zwei Rillen (39a, 39b) aufweist, deren Querschnitte einander diametral entgegengesetzt sind und eine zu der von den Haltekanälen (17) definierten Ebene allgemein lotrechte Ebene bilden.

10. Einheit nach einem der vorhergehenden Ansprüche, **dadurch gekennzeichnet, dass** der Thermistor (5) ein CTP (positiver Temperaturkoeffizient) oder ein CTN (negativer Temperaturkoeffizient) ist.

11. Verfahren zur Herstellung eines Hochtemperatursensors zur Messung der Kraftfahrzeugabgase, **dadurch gekennzeichnet, dass** es die folgenden Schritte aufweist:
- Einführen der Verbindungsleitungsdrähte (9) eines Thermistors (5) in eine keramische Isolierhülle (10), wobei die Hülle (10) eine Auflageseite (21) sowie für jeden Leitungsdraht (9) einen zugeordneten Haltekanal (17) aufweist;
- Anordnen der so geformten Einheit (5, 9, 10) auf einem vom Sensor getrennten Montageträger (25), der eine zugeordnete Seite (23) aufweist, so dass die Auflageseite (21) mit der zugeordneten Seite (23) zusammenwirkt, um die Einheit (5, 9, 10) bezüglich des Montageträgers (25) zu stabilisieren;
- Durchführen der Verkabelung der Verbindungsleitungsdrähte (9) mit zweiten Leitungsdrähten (15);
- Liefern eines hohlen Gehäuses (7) allgemein länglicher Form, das an einem (3) seiner Enden eine Aufnahme (3) für einen Thermistor (5) und am anderen seiner Enden eine Öffnung aufweist;
- Einführen der Einheit (5, 9, 10) durch die Öffnung des Gehäuses (7) bis zum Einsetzen des Thermistors (5) in der Aufnahme (3);
- Schließen der Öffnung.

## Claims

1. Assembly comprising a high-temperature sensor for measuring exhaust gases of a motor vehicle, said high-temperature sensor comprising:
- a thermistor (5),
- two electric wires (9), each having an end connected to the thermistor (5), for guiding the temperature signal provided by the thermistor (5) to a treatment unit,
- a ceramic insulating sheath (10), of which the outer casing (19) is generally cylindrical, said sheath (10) comprising an associated holding channel (17) for each electric wire (9), **characterized in that** said assembly further comprises a mounting bracket (25), separate from said sensor, and **in that** at least one portion (P) of the casing (19) of said sheath (10) has at least one support surface (21) able to cooperate with an associated surface (23) of said mounting bracket (25).

2. Assembly according to Claim 1, **characterized in that** the support surface (21) comprises at least one flat portion (27) for cooperating with an associated planar surface (23) of the mounting bracket (25).

3. Assembly according to Claim 2, **characterized in that** the flat portion (27) is formed in a plane generally parallel to and lower than the plane defined by the holding channels (17).

4. Assembly according to Claim 2, **characterized in that** the support surface (21) comprises two flat portions (31a, 31b) arranged opposite one another in a plane generally parallel to the plane defined by the holding channels (17).

5. Assembly according to Claim 2, **characterized in that** the support surface (21) comprises two pairs of flat portions (33a, 33b; 33c, 33d) arranged opposite one another in a plane generally parallel to the plane defined by the holding channels (17), the flat portions (33a, 33b; 33c, 33d) of each pair being adjacent.

6. Assembly according to any one of the preceding claims, **characterized in that** the support surface (21) comprises at least one notch (37) for cooperating with an associated surface (23) of the mounting bracket (25) having at least one mating protrusion.

7. Assembly according to Claim 6, **characterized in that** the support surface (21) comprises four notches (37a, 37b, 37c, 37d) such that the cross section of the support surface (21) is generally substantially cross-shaped.

8. Assembly according to any one of the preceding claims, **characterized in that** the support surface (21) comprises at least one groove (39) for cooperating with an associated surface of the mounting bracket comprising at least one rib.

9. Assembly according to Claim 8, **characterized in that** the support surface (21) comprises two grooves (39a, 39b), of which the cross sections are diametrically opposed and form a plane generally perpendicular to the plane defined by the holding channels (17).

10. Assembly according to any one of the preceding claims, **characterized in that** the thermistor (5) is a PTC (positive temperature coefficient) thermistor or an NTC (negative temperature coefficient) thermistor.

11. Method for manufacturing a high-temperature sensor for measuring exhaust gases of a motor vehicle, **characterized in that** it comprises the following steps:
- inserting the electric connection wires (9) of a thermistor (5) into a ceramic insulating sheath (10), said sheath (10) comprising a support surface (21) and, for each electric wire (9), an associated holding channel (17);
- arranging the assembly (5, 9, 10) thus formed on a mounting bracket (25) separate from said sensor and comprising an associated surface (23), such that the support surface (21) cooperates with the associated surface (23) so as to stabilize said assembly (5, 9, 10) relative to the mounting bracket (25);
- wiring the electric connection wires (9) to second electric wires (15);
- providing a hollow casing (7) of generally elongate shape comprising, at one (3) of its ends, a seat (3) for a thermistor (5) and, at the other of its ends, an opening;
- inserting said assembly (5, 9, 10) through the opening in the casing (7) until the thermistor (5) is positioned in the seat (3);
- closing said opening again.
